# FASCICULE DE BREVET EUROPEEN

(11) **EP 1 189 719 B1**
(45) Date de publication et mention de la délivrance du brevet: **16.04.2003**
(21) Numéro de dépôt: 00934839.2
(22) Date de dépôt: 20.06.2000
(51) Int. Cl.: B23B 27/08

(54) **OUTIL DE COUPE A PLAQUETTE RAPPORTEE**
SCHNEIDWERKZEUG MIT SCHNEIDEINSATZ
CUTTING TOOL WITH DIRECTLY MOUNTED TIP

(30) Priorité: 23.06.1999 CH 116499; 02.07.1999 FR 9908748
(43) Date de publication de la demande: 27.03.2002
(73) Titulaire: Applitec Moutier S.A., 2740 Moutier (CH)
(72) Inventeur: CHAMPION, François, CH-2740 Moutier (CH)
(74) Mandataire: Gresset, Jean
(86) Numéro de dépôt international: CH0000335
(87) Numéro de publication internationale: WO01000360

(56) Documents cités:
- WO-A-99/00208
- CH-A- 686 935

## Description

La présente invention concerne les outils de coupe à plaquette rapportée, du type formé d'un porte-outil, d'une plaquette d'usinage en métal dur, par exemple en carbure de tungstène, et de moyens de fixation de la plaquette sur le porte-outil.

De tels outils permettent de travailler à de hautes vitesses de coupe du fait que les carbures conservent leurs caractéristiques physiques même à des températures élevées. Ces matériaux sont malheureusement fragiles et relativement coûteux. C'est pourquoi le porte-outil est formé dans un autre type de matériau, par exemple de l'acier trempé, qui est plus élastique, facilement usinable et de moindre coût.

Le porte-outil comporte, généralement, un réceptacle, destiné à recevoir la plaquette, défini par une assise et au moins une paroi d'appui perpendiculaire à l'assise. La plaquette comprend une base et une surface d'appui perpendiculaire à la base, destinées à coopérer respectivement avec l'assise et la paroi. Les moyens de fixation sont formés d'une ou de deux vis, engagées dans des trous pratiqués dans la plaquette et le porte-outil pour rendre solidaires ces derniers. Un tel dispositif comprenant les caractéristiques du préambule de la revendication 1 est, par exemple, décrit dans le document CH 686 935.

Ces outils sont fréquemment utilisés sur des machines de production industrielle dont l'entretien doit pouvoir se faire dans les délais les plus brefs. C'est pourquoi ils comportent, en outre, des moyens de positionnement permettant de positionner, avec précision, la plaquette sur le porte-outil. Ces moyens de positionnement sont formés par des cônes que comportent les têtes de vis et les trous pratiqués dans la plaquette, qui coopèrent l'un avec l'autre. Ils sont disposés de manière qu'en serrant les vis, les cônes génèrent une force qui applique la surface d'appui de la plaquette contre la paroi du réceptacle. De la sorte, l'opération de serrage assure la rigidité de l'ensemble et son positionnement de façon suffisamment précise pour éviter des opérations de réglage.

Comme expliqué ci-dessus, l'utilisation de métal dur permet de travailler à de très hautes vitesses de coupe. L'expérience a montré que la durée de vie de la plaquette était limitée plus par les conditions de fixation de l'outil que par sa résistance mécanique. Il a en effet été constaté qu'avec le mode de fixation décrit plus haut, il apparaît, au cours du temps, des vibrations de l'outil qui n'affectent pas la précision d'usinage, mais qui provoquent une usure prématurée de l'arête de coupe.

Le but principal de la présente invention est d'augmenter encore la rigidité de la liaison entre le porte-outil et la plaquette, et ainsi prolonger la durée de vie de cette dernière. A cet effet, l'outil de coupe selon l'invention est formé d'un porte-outil, d'une plaquette, de moyens de fixation et de moyens de positionnement de la plaquette sur le porte-outil.

Dans cet outil:
- le porte-outil comporte un réceptacle, destiné à recevoir la plaquette et comprenant une assise et au moins une paroi d'appui perpendiculaire à l'assise,
- la plaquette est de forme générale prismatique, avec une base et une surface d'appui perpendiculaire à la base, destinées à coopérer respectivement avec l'assise et la paroi, et
- les moyens de fixation comportent au moins une vis coopérant à la fois avec la plaquette et le porte-outil pour les solidariser.

L'outil selon l'invention est caractérisé en ce que les moyens de positionnement sont formés de sillons pratiqués dans l'assise et dans la base, de formes complémentaires et définissant des surfaces de guidage, et en ce que la vis, en position serrée, presse la plaquette sur le porte-outil, les surfaces de guidage coopérant les unes avec les autres pour engendrer une force résultante qui compresse la surface d'appui contre la paroi d'appui telle que déposée.

« On connaît certes, par le document WO 99/00208, des outils de coupe munis de sillons, destinés à assurer le positionnement de la plaquette sur le porte-outil. Dans ce cas, les sillons assurent le positionnement relatif de ces deux composants, mais ne participent pas à la rigidification de l'ensemble.

Afin de permettre un guidage précis et sûr, il est avantageux que les sillons soient de section triangulaire.

De bons résultats ont été obtenus avec les caractéristiques suivantes:
- Les sections triangulaires sont isocèles avec un angle droit au sommet.
- Les sillons sont rectilignes et orientés parallèlement à la paroi et à la surface d'appui.

Le porte-outil et la plaquette comportent des trous de forme générale cylindrique, dans lesquels la vis est engagée et serrée. Le trou pratiqué dans le porte-outil définit un axe de serrage, et le trou pratiqué dans la plaquette un axe de guidage, ces axes étant perpendiculaires à la base et à l'assise.

De manière avantageuse, la plaquette comporte au moins deux arêtes de coupe et les sillons et les arêtes sont disposés dans une symétrie axiale par rapport à l'axe de guidage.

Dans ce cas, et pour assurer une pression idoine de la paroi contre la surface d'appui, la plaquette a une largeur supérieure au double de la distance comprise entre l'axe de serrage et la paroi. Cette différence-est typiquement comprise entre 0.05 et 0.15 mm.

La qualité de la fixation de la plaquette est améliorée lorsqu'elle est assurée par deux vis, engagées dans des trous de la plaquette et du porte-outil et tournant autour d'axes parallèles entre eux, l'axe de serrage leur étant médian.

De tels outils sont particulièrement bien adaptés pour être utilisés comme burin destiné à équiper une décolleteuse.

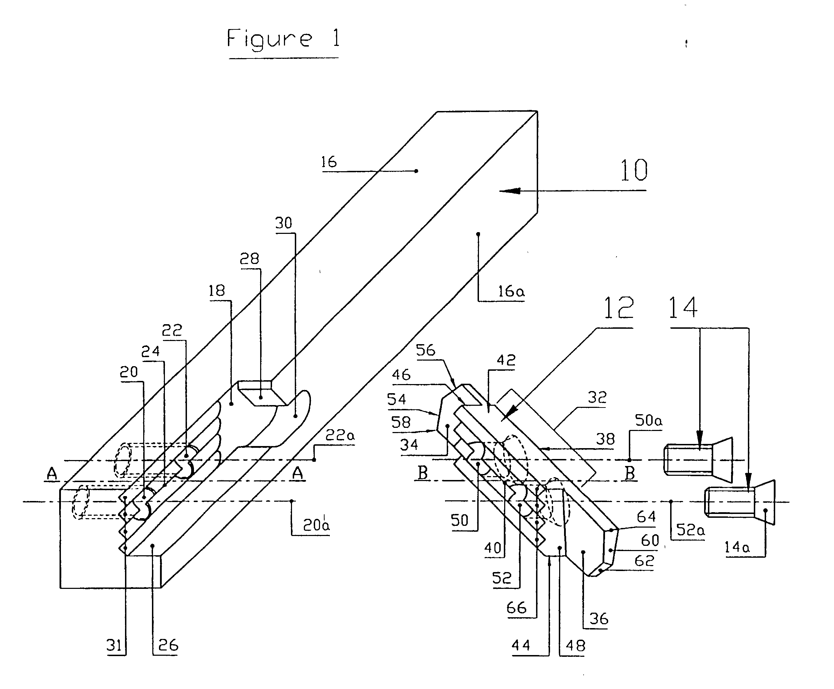

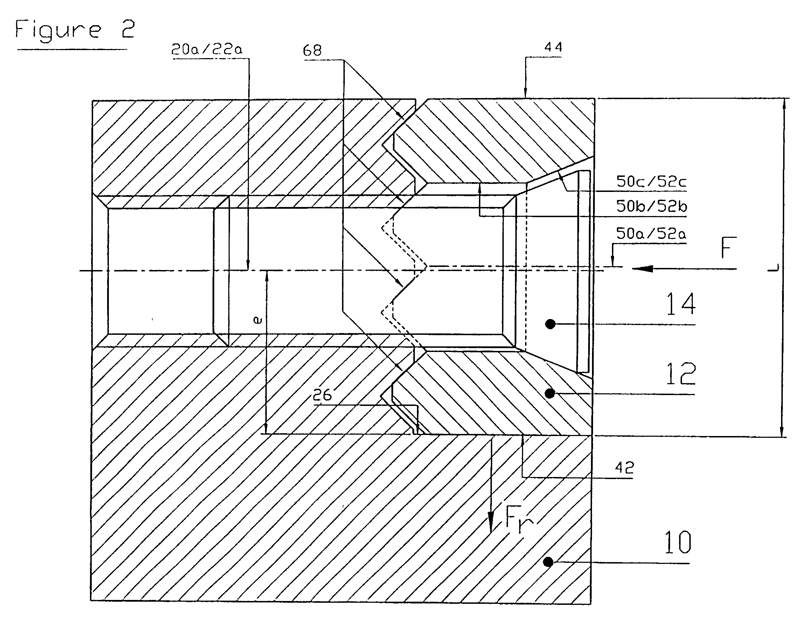

D'autres avantages et caractéristiques de l'invention ressortiront de la description qui va suivre, faite en regard du dessin annexé, dans lequel la figure 1 représente, en vue éclatée, un mode de réalisation d'un outil selon l'invention, et la figure 2 une vue en coupe latérale de l'outil de la figure 1.

L'outil de coupe représenté au dessin est un burin qui comporte un porte-outil 10, une plaquette d'usinage 12 et des vis 14, à tête conique 14a , pour assembler la plaquette 12 sur le porte-outil 10.

Le porte-outil 10 est formé d'un corps 16 parallélépipédique, dont une face 16a comporte un dégagement pratiqué dans l'un de ses coins et tenant lieu de réceptacle 18. Deux trous taraudés 20 et 22, destinés à recevoir les vis 14, traversent le corps 16 de part en part et débouchent dans le réceptacle 18. Ils définissent des axes 20a et 22a perpendiculaires à la face 16a et distants de celle-ci d'une valeur e (Fig. 2). Dans le but de faciliter la compréhension de l'invention, le dessin porte un axe A-A, médian des axes 20a et 22a, appelé axe de serrage.

Le réceptacle 18 comporte un fond dont la surface est parallèle à la face 16a et qui définit une assise 24. Il comporte, en outre, des parois 26 et 28 perpendiculaires à la face 16a et une gorge 30 séparant les parois 26 et 28.

L'assise 24 est creusée de sillons 31, occupant toute sa largeur, rectilignes et parallèles entre eux et à la paroi 26, qui s'étendent depuis l'extrémité du parallélipipède jusque au-delà du trou 22 sur une distance sensiblement égale à celle comprise entre le trou 20 et l'extrémité du corps 16 dans le sens des sillons 31. Les sillons 31 sont disposés symétriquement par rapport à un plan passant par les axes 20a et 22a. Ils ont une section triangulaire isocèle, dont l'angle au sommet est sensiblement droit, l'arête étant coupée.

La paroi 28 se trouve dans le prolongement des sillons 31 et forme avec eux un angle d'environ 45°. Les fonctions de cette paroi et de la gorge 30 seront précisées plus loin.

Le corps 16 du porte-outil est avantageusement fabriqué en acier pour outils, par exemple un acier au soufre, manganèse et plomb.

La plaquette d'usinage 12 est de forme générale prismatique. Elle comprend plus particulièrement un coeur 32 et deux ailes 34 et 36. Le coeur 32 est parallélépipédique, avec une face supérieure 38, une base 40, deux côtés latéraux 42 et 44 et deux côtés frontaux 46 et 48. Les ailes 34 et 36 sont respectivement solidaires des côtés frontaux 46 et 48 et les prolongent.

Le coeur 32 est percé de deux trous 50 et 52 dont les axes 50a et 52a sont perpendiculaires à la face supérieure 38 et à la base 40. Ces trous comportent une partie cylindrique, identifiée par la lettre b et une partie conique c, le plus grand diamètre du cône étant ouvert sur la face supérieure 38 (fig. 2). Afin de faciliter la compréhension de l'invention, le dessin porte un axe B-B médian aux axes 50a et 52a et appelé axe de guidage.

L'aile 34 comporte des surfaces de dégagement 54 et 56 perpendiculaires à la face supérieure 38. Plus précisément, la surface 54 est attenante aux surfaces 44 et 56 et forme un angle d'environ 80° avec la surface 44, alors que la surface 56 est attenante à la surface 42, l'angle à l'intersection de ces surfaces étant de 135°.

Les surfaces 44 et 54 définissent, à leur intersection, une arête 58 tenant lieu d'arête de coupe, qui assure la fonction active de l'outil.

De même, l'aile 36 comporte des surfaces de dégagement 60 et 62 équivalentes respectivement aux surfaces 54 et 56, la surface 60 étant attenante à la surface 42, et une arête de coupe 64 équivalente à l'arête 58.

De la sorte, la plaquette 12 a une structure symétrique autour de l'axe B-B. Sa largeur L est égale à la distance comprise entre les deux côtés latéraux 42 et 44.

Lorsque la plaquette 12 est en place dans le réceptacle 18, dans l'orientation telle que représentée à la figure 1, l'aile 36 déborde du porte-outil 10, de sorte que l'arête de coupe 64 peut être engagée dans une pièce à tourner et assurer ainsi sa fonction d'usinage. L'aile 34 est disposée à l'intérieur du réceptacle 18, l'arête de coupe 58 étant engagée dans la gorge 30, sans contact avec le porte-outil 10. Elle est ainsi protégée.

Lorsque l'arête de coupe 64 est usée, il suffit de retirer les vis 14 et de tourner de 180° la plaquette autour de l'axe B-B de manière que l'aile 34 prenne la place de l'aile 36, l'arête de coupe 58 étant alors fonctionnelle.

La base 40 présente un réseau de sillons 66 disposés parallèlement aux côtés latéraux 42 et 44, de même pas que et de section complémentaire aux sillons 31 de l'assise 24. Ce réseau, de pas sensiblement compris entre 1 et 2 mm, est symétrique par rapport à un plan passant par les axes 50a et 52a. Du fait que la largeur L est légèrement supérieure à deux fois la distance e, par exemple de 0,05 mm, le côté 42 vient prendre appui contre la paroi 26 du porte-outil 10 et les sillons 66 sont en appui contre les sillons 31 par un flan seulement, formant ensemble des surfaces de guidage 68. La différence entre la largeur L et le double de la distance e est, en général, typiquement comprise entre 0,05 et 0,15 mm.

Comme on peut le voir plus particulièrement sur la figure 2, en serrant les vis 14, la pression qu'elles exercent sur la plaquette 12 engendre une force F orientée selon l'axe A-A qui applique les unes contre les autres les surfaces de guidage 68, ce qui engendre une force résultante Fᵣ orthogonale à la force F. A cela s'ajoute l'effet des têtes coniques 14a des vis 14 sur les cônes 50c et 52c des trous 50 et 52. La force résultante F,tend à amener la plaquette 12 dans une position telle que son axe de guidage B-B soit confondu avec l'axe de serrage A-A du porte-outil 10. Ce mouvement est limité du fait que la demi-largeur L/2 de la plaquette 12 est supérieure à la distance e. De la sorte, la force Fᵣ comprime le côté 42 de la plaquette contre la paroi 26.

Il faut noter que l'effet de serrage des côtés 42 ou 44 contre la paroi 26 peut être complété par un serrage des surfaces 56 ou 62 contre la paroi 28. Ce serrage complémentaire peut être obtenu en dimensionnant la plaquette 12 et le porte-outil 10 de manière que les têtes coniques 14a des vis 14 appuient sur les cônes 50c et 52c en un point tel qu'un rayon partant des axes 50a et 52a et passant par le contact, se prolonge jusqu'à couper les surfaces des deux parois 26 et 28 ou leur prolongement dans la gorge 30.

Dans l'exemple de réalisation décrit et représenté, les sillons sont rectilignes et parallèles entre eux. D'autres configurations pourraient être envisagées. Les sillons pourraient ainsi être formés de cercles concentriques aux axes A-A pour le porte-outil et B-B pour la plaquette. Il pourrait encore être possible de disposer les sillons de manière que la force résultante Fᵣ ne soit pas perpendiculaire à la paroi 26, mais orientée de façon que la pression soit aussi exercée contre la paroi 28. L'homme du métier choisira la solution optimale en fonction du type d'outil et de l'orientation de l'arête de coupe.

Dans une autre variante non représentée, les vis sont engagées dans des trous du porte-outil 10 et vissées sur des écrous solidaires ou non de la plaquette 12.

Les têtes de vis 14 pourraient ne pas être coniques, le seul effet de serrage étant alors obtenu par la pression des sillons 66 de la plaquette 12 sur les sillons 31 du porte-outil 10.

Il peut encore être noté que la forme des ailes 34 et 36 des plaquettes 12 peut considérablement varier, selon que l'outil est destiné au tronçonnage, au copiage, au tournage en bout, etc.

Le même principe peut être appliqué sans autre à des fraises munies d'une ou plusieurs plaquettes d'usinage en métal dur.

## Revendications

1. Outil de coupe comportant un porte-outil (10), une plaquette d'usinage (12), des moyens de fixation (14) et des moyens de positionnement (31, 66) de la plaquette sur le porte-outil, dans lequel:
• le porte-outil comporte un réceptacle (18), destiné à recevoir ladite plaquette (12) et comprenant une assise (24) et au moins une paroi d'appui (26, 28) perpendiculaire à l'assise,
• la plaquette (12) est de forme générale prismatique, avec une base (40) et une surface d'appui (42, 44) perpendiculaire à la base, destinées à coopérer respectivement avec l'assise (24) et la paroi (26; 28), et
• les moyens de fixation comportent au moins une vis (14) coopérant à la fois avec la plaquette (12) et le porte-outil (10) pour les solidariser,
**caractérisé en ce que** les moyens de positionnement sont formés de sillons (31, 66) pratiqués dans l'assise et dans la base, de formes complémentaires et constituant des surfaces de guidage (68), et **en ce que** ladite vis (14), en position serrée, presse la plaquette (12) sur le porte-outil (10), lesdites surfaces de guidage (68) coopérant l'une avec l'autre pour engendrer une force résultante (Fᵣ) qui compresse la surface d'appui (42, 44) contre la paroi d'appui (26).

2. Outil selon la revendication 1, **caractérisé en ce que** lesdits sillons (31, 66) sont de section triangulaire.

3. Outil selon la revendication 2, **caractérisé en ce que** lesdites sections triangulaires sont isocèles, avec un angle droit au sommet.

4. Outil selon l'une des revendications 1 à 3, **caractérisé en ce que** lesdits sillons (31, 66) sont linéaires et orientés parallèlement à la paroi et à la surface d'appui.

5. Outil selon l'une des revendications 1 à 4, **caractérisé en ce que** le porte-outil (10) et la plaquette (12) comportent des trous de forme générale cylindrique, dans lesquels ladite vis (14) est engagée et serrée, et qui définissent respectivement un axe de serrage (A-A) et un axe de guidage (B-B), perpendiculaires à la base (40) et à l'assise (24).

6. Outil selon la revendication 5, **caractérisé en ce que** ladite plaquette comporte au moins deux arêtes de coupe (58, 64) et **en ce que** lesdits sillons (66) et les arêtes sont disposés dans une symétrie axiale par rapport à l'axe de guidage (B-B).

7. Outil selon la revendication 6, **caractérisé en ce que** ladite plaquette a une largeur (L) supérieure au double de la distance (e) comprise entre l'axe de serrage (A-A) et la paroi (26).

8. Outil selon la revendication 7, **caractérisé en ce que** ladite différence est comprise entre 0.05 et 0.15 mm.

9. Outil selon l'une des revendications 5 à 8, **caractérisé en ce qu'**il comporte deux vis (14) de fixation, engagée chacune dans des trous (50, 52; 20, 22) de ladite plaquette et du porte-outil et tournant autour d'axes (20a, 22a) parallèles entre eux, l'axe de serrage (A-A) leur étant médian.

10. Outil selon l'une des revendications 1 à 8, **caractérisé en ce qu'**il constitue un burin destiné à équiper une décolleteuse.

## Claims

1. Cutting tool consisting of a tool-holder (10), a machining tip (12), means of fastening (14) and means of positioning (31, 66) the tip on the tool-holder, in which:
• the tool-holder consists of a housing (18) designed to receive said tip (12) and comprising a seat (24) and at least one support wall (26, 28) perpendicular to the seat;
• the tip (12) is of general prismatic shape, with a base (40) and a support surface (42, 44) perpendicular to the base, designed to co-operate with the seat (24) and the wall (26, 28) respectively, and
• the means of fastening include at least one screw (14) co-operating with both the tip (12) and the tool-holder (10) to join them together;
**characterized by** the fact that the means of positioning are formed of grooves (31, 66) created in the seat and base, of complementary shapes and forming guiding surfaces (68), and by the fact that said screw (14), in tightened position, presses the tip (12) on the tool-holder (10), said guiding surfaces (68) co-operating with one another to generate a resultant force (F), which compresses the support surface (42, 44) against the support wall (26).

2. Tool according to claim 1, **characterized by** the fact that said grooves (31, 66) are of triangular section.

3. Tool according to claim 2, **characterized by** the fact that said triangular sections are isosceles, with a right angle at the apex.

4. Tool according to one of the claims 1 to 3, **characterized by** the fact that said grooves (31, 66) are linear and oriented parallel to the wall and the support surface.

5. Tool according to one of the claims 1 to 4, **characterized by** the fact that the tool-holder (10) and the tip (12) contain holes of general cylindrical shape, in which said screw (14) is inserted and tightened, and which define a clamping axis (A-A) and a guiding axis (B-B) respectively, perpendicular to the base (40) and seat (24).

6. Tool according to claim 5, **characterized by** the fact that said tip has at least two cutting edges (58, 64) and that said grooves (66) and edges are arranged in axial symmetry relative to the guiding axis (B-B).

7. Tool according to claim 6, **characterized by** the fact that said tip has a width (L) greater than twice the distance (e) between the clamping axis (A-A) and the wall (26).

8. Tool according to claim 7, **characterized by** the fact that said difference is in the range between 0.05 and 0.15 mm.

9. Tool according to one of the claims 5 to 8, **characterized by** the fact that it contains two fastening screws (14), each inserted in holes (50, 52; 20, 22) of said tip and of the tool-holder and rotating around axes (20a, 22a) parallel to one another, the clamping axis (A-A) being median to them.

10. Tool according to one of the claims 1 to 8, **characterized by** the fact that it forms a chisel designed to equip a screw-cutting machine.

## Patentansprüche

1. Schneidwerkzeug mit einem Werkzeugträger (10), einer Bearbeitungsplatte (12), Mitteln zur Befestigung (14) und Mitteln zur Positionierung (31, 66) der Bearbeitungsplatte auf dem Werkzeugträger, in dem:
- der Werkzeugträger mit einer Aufnahmevorrichtung (18) zur Aufnahme der besagten Platte (12) ausgestattet ist und mit einer Stützschicht (24) und mindestens einer Stützwand (26, 28) versehen ist, die zur Stützschicht senkrecht steht;
- bei dem die Platte (12) eine allgemeine Form eines Prismas hat, mit einer Grundfläche (40) und einer Stützfläche (42, 44), die zur Grundfläche senkrecht steht, die jeweils mit der Stützschicht (24) und der Wand (26, 28) zusammen wirken und
- Befestigungsmitteln, mit mindestens einer Schraube (14), die gleichzeitig auf die Platte (12) und den Werkzeugträger wirkt, um diese so zu befestigen,
**dadurch gekennzeichnet, dass** die Mittel zur Ausrichtung aus Rillen (31, 66) in der Stützschicht und Grundfläche und aus Zusatzformen geformt sind, die so Führungsoberflächen (68) bilden, und dadurch, dass die besagte Schraube (14) in angezogener Stellung die Platte (12) auf den Werkzeugträger (10) drückt, wobei die besagten Führungsoberflächen (68) zusammenwirken, um so eine Kraft (F) zu erzeugen, die die Stützfläche (42, 44) gegen die Stützwand (26) drückt.

2. Werkzeug nach Anspruch 1, **dadurch gekennzeichnet, dass** die besagten Rillen (31, 66) in einem dreieckigen Abschnitt liegen.

3. Werkzeug nach Anspruch 2, **dadurch gekennzeichnet, dass** die besagten dreieckigen Abschnitte gleichschenklig sind und an der Spitze einen rechten Winkel bilden.

4. Werkzeug nach einem der Ansprüche 1 bis 3, **dadurch gekennzeichnet, dass** die besagten Rillen (31, 66) linear und parallel zur Wand und Stützoberfläche ausgerichtet sind.

5. Werkzeug nach einem der Ansprüche 1 bis 4, **dadurch gekennzeichnet, dass** der Werkzeugträger (10) und die Bearbeitungsplatte (12) mit hauptsächlich zylindrischen Bohrungen ausgestattet sind, in denen die besagte Schraube eingesetzt und angezogen wird und die jeweils eine Spannachse (A-A) und eine Führungsachse (B-B) bilden, die zur Grundfläche (40) und Stützschicht (24) parallel sind.

6. Werkzeug nach Anspruch 5, **dadurch gekennzeichnet, dass** die besagte Platte (12) über mindestens zwei Schneiden (58, 64) verfügt und dadurch, dass die besagten Rillen und Schneiden zur Führungsachse (B-B) axial-symmetrisch ausgerichtet sind.

7. Werkzeug nach Anspruch 6, **dadurch gekennzeichnet, dass** die besagte Platte eine Breite (L) des doppelten Abstands (e) zwischen der Spannachse (A-A) und der Wand hat.

8. Werkzeug nach Anspruch 7, **dadurch gekennzeichnet, dass** der besagte Abstand zwischen 0,05 und 0,15 mm beträgt.

9. Werkzeug nach einem der Ansprüche 5 bis 8, **dadurch gekennzeichnet, dass** es über zwei Befestigungsschrauben (14) verfügt, die jeweils in Bohrungen (50, 52, 20, 22) der besagten Platten und des Werkzeugträgers befestigt sind und um Achsen drehen (20a, 22a), die zueinander parallel sind , wobei die Spannachse deren Mittellinie ist.

10. Werkzeug nach einem der Ansprüche 1 bis 8, **dadurch gekennzeichnet, dass** es einen Meißel bildet, der in einem Drehautomaten verwendet werden kann.
